# EUROPEAN PATENT SPECIFICATION

(11) **EP 0 499 626 B1**
(45) Date of publication and mention of the grant of the patent: **17.04.1996**
(21) Application number: 91900491.1
(22) Date of filing: 31.10.1990
(51) Int. Cl.: G01T 1/10, G01T 1/105

(54) **METHOD FOR RADIATION DETECTION AND MEASUREMENT**
VERFAHREN ZUR FESTSTELLUNG UND MESSUNG VON STRAHLUNG
PROCEDE DE DETECTION ET DE MESURE DE RADIATIONS

(30) Priority: 03.11.1989 US 431307
(43) Date of publication of application: 26.08.1992
(73) Proprietor: BATTELLE MEMORIAL INSTITUTE, Richland, WA 99352 (US)
(72) Inventor: MILLER, Steven, D., Richland, WA 99352 (US)
(74) Representative: Evans, David Charles
(86) International application number: US9006316
(87) International publication number: WO9106875

(56) References cited:
- US-A- 4 507 562
- US-A- 4 636 642
- US-A- 4 638 163
- US-A- 4 792 691
- US-A- 4 801 806
- US-A- 4 825 084
- HEALTH PHYSICS, vol. 29, no. 3, September 1975, Pergamon Press, (Northern Ireland); S. DATTA et al.: "Luminescene dosimetry using sodium fluoride single crystals", pages 420-421
- HEALTH PHYSICS, vol. 22, no. 5, May 1972, Pergamon Press, (Northern Ireland); D.F. REGULLA: "Lithium fluoride dosimetry based on radiophotoluminescene", pages 491-496
- APPLIED PHYSICS, vol. A26, May 1991, Springer-Verlag, (Heidelberg, DE); H. SCHNECKENBURGER et al.: "Time-resolved investigations of radiophotoluminescence in metaphosphate glass dosimeters", pages 23-26

## Description

The present invention relates to a method of measuring radiation dose.

When solid-state crystals are subjected to ionizing radiation, several absorption bands make their appearance at increasingly higher levels of radiation damage ⁽¹⁾. In the case of the alkali halides, the F-band is the first of the radiation damage centres to produce a detectable absorption band. Although the F-centre provides the greatest concentration of damage centres for a given radiation exposure, its physical properties preclude its use in quantifying ionizing radiation exposure using luminescence techniques. The luminescence of the F-centre is thermally quenched below room temperature.

With increasing radiation exposure, a second damage centre builds up in the absorption spectrum. The second damage centre is known as the M-centre and is generally thought to consist of two adjacent F-centres ^{(2,3)}. Unlike the F-centre, however, excitation into the longer wavelength M-centre absorption band at room temperature produces luminescence ⁽⁴⁾. M-centre luminescence involves a Stokes' shift, allowing the luminescence to be observed at a significantly different wavelength from the exciting wavelength.

Highly purified lithium fluoride ^{(LiF)} crystals have long been used as optical windows.

Optical grade LiF is known for its excellent transmission from the deep ultraviolet through to the infra-red. Radiation dosimetry applications have so far been restricted to high-level Mega-Rad gamma dosimetry using radiation-induced absorption peaks measured with a spectrophotometer. However, absorption measurements are a very insensitive way to measure these radiation damage centres.

A more sensitive method of measuring radiation damage than absorption measurement can be accomplished by measuring the M-centre luminescence.

Health Physics, 29 (3), 1975, pp 420-421 (S.Dalton et.al.) for example discloses the use of sodium fluoride single crystals in luminescence dosimetry. The crystals were subjected to ionizing X-ray radiation. The M-centres were then excited using a 250-W high pressure mercury arc filtered by a 350 nm interference filter; M-centre luminescence peaking at 660 nm was observed at right angles to the exciting beam.

Health Physics, 22 (4), 1972, pp 491-496 (D.F. Regulla) discloses the use of lithium fluoride crystals for radiophotoluminescence dosimetry. The crystals were exposed to ⁶⁰Co gamma radiation and to 50-300 KV moderately filtered X-rays. The absorbtion spectra of the crystals were measured after being subjected to the gamma- and x-rays; F, R and M bands were observed at 250 nm, 310 nm and 450 nm respectively. On excitation with 450 nm the emission spectrum of the crystals was observed to have a main peak at 520 nm and a secondary peak at 630 nm, suitable for dosimetry.

According to the present invention there is provided a method of measuring radiation dose, comprising:
exposing body of material to ionizing radiation, the material being crystalline lithium fluoride ;
exciting the material with optical radiation at a first wavelength that is near a peak damage centre absorption wavelength of said material, and
thereafter measuring optical energy emitted from the material by luminescence at a second wavelength that is longer than the first wavelength;
characterised in that the material is heated prior to the exposure to ionizing radiation thereby to erase damage centres initially present in the material.

Typically, the material may be heated to 873 K for 1 hour.

Excitation of an LiF crystal with a 442 nm He-Cd laser has been found to amplify significantly the luminescence yield of the M-centre of LiF. An He-Cd laser was the preferred excitation laser because absorption measurements in LiF indicate the peak of the M-centre absorption occurs at 443 nm. Laser stimulation produces an excited state of the M-centre, which undergoes a very strong Stokes' shift. The peak of the M-centre emission spectrum occurs at 665 nm with a half-width of 0.36 ev. Since the excitation wavelength differs significantly from the emission wavelength, measurement of the deep red emission can be done simultaneously with the excitation. Therefore, optical filtration provides a means of measuring the M-centre luminescence simultaneously with laser excitation into the M-centre absorption band. The population of M-centres grows with increasing radiation damage, and therefore M-centre luminescence provides a basis for radiation dosimetry. Readout of the LiF can be accomplished in a fraction of a second.

While all members of the alkali halide family are candidates for M-center luminescence dosimetry, lithium fluoride (LiF) was chosen for a number of reasons. First, the crystal is commercially available in large quantities through its use as optical window material. Secondly, LiF is nearly tissue equivalent in its energy response to photons, making it a suitable material for mixed field dosimetry applications. Finally, LiF can be excited by a low cost, commercially available blue-light laser and its M-center luminescence occurs significantly within the visible spectrum. This feature simplifies light detection since phototubes that are sensitive to the visible light spectrum are readily available. Data describing the dosimetric properties of the M-center and other general physical data concerning the M-center are presented in the detailed description, which also discusses the possibilities for M-center dosimetry in LiF.

M-center luminescence exists in almost every solid-state crystal which can be artificially grown at the present time and is not restricted to the alkali halide group. Each crystal has a characteristic M-center absorption band which can be measured following a large radiation exposure (around l Mega R). Illumination into the M-center absorption band with laser light stimulates M-center luminescence which occurs at a significantly different wavelength from the exciting laser light beam. Easy separation and detection is possible simultaneously with the exciting light by using an optical filter which absorbs the exciting light and transmits the M-center luminescence. Following is a description by way of example only and with reference to the accompanying drawings of methods of carrying the present invention into effect.
In the drawings:-

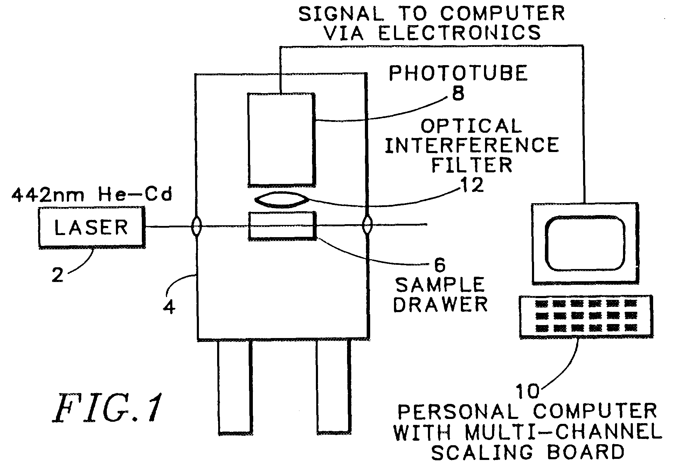

FIG. 1 is a diagram of the M-center luminescence readout system. The He-Cd laser produces 70 mW at 442 nm with a beam diameter of 1 mm. The reader consists of a light tight metal box with a sample drawer for insertion and removal of the LiF crystals. The chamber surfaces are made of a black plastic to reject and shield stray light. An RCA 8852 phototube with a broadband optical interference filter is used to reject the laser light and transmit the M-center luminescence. A personal computer houses a multichannel scaling board for photon counting capable of 50 MHz.

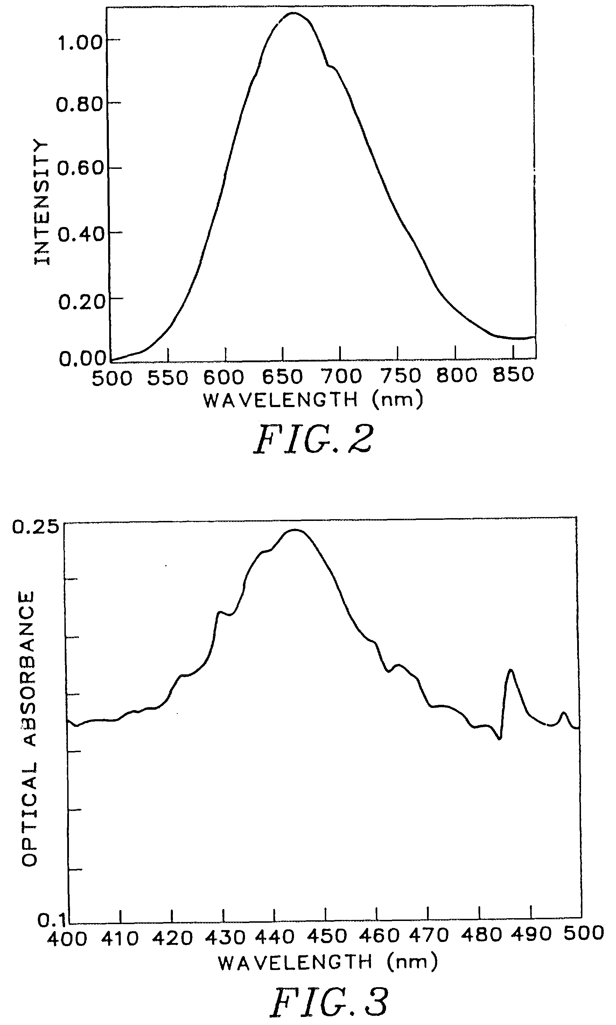

FIG. 2 shows an LiF M-center luminescence optical emission spectrum measured using a Tracor Northern optical multichannel analyzer. The M-center luminescence emission was excited by a 442 nm He-Cd laser. The LiF crystal was given an exposure of 2.6 C/kg using a ⁶⁰Co source. The peak of the emission spectrum is 665 nm with a half-width of 0.36 ev.

FIG. 3 shows an optical absorption spectrum for a LiF crystal exposed to 260 C/kg. The optical path length of the LiF crystal was 6 mm. The optical absorption spectrum was taken using a Hewlett-Packard diode array spectrometer. The peak of the absorption spectrum was measured to be 443 nm.

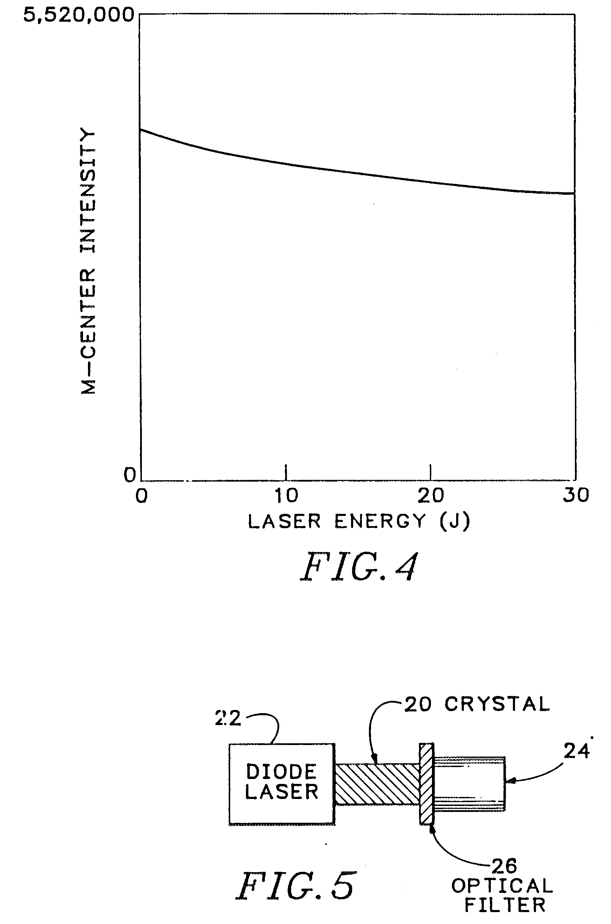

FIG. 4 shows the optical bleaching rate of the M-center luminescence as a function of 442 nm He-Cd laser energy incident upon the crystal. The crystal used in this figure was exposed to 26 mC/kg. The time constant for the optical bleaching was found to be 32 s. The total reduction in M-center luminescent intensity was 20% for a delivered energy of 30 J.

FIG. 5 is a schematic diagram of a personnel dosimeter based on an LiF crystal.

Optical grade LiF single crystals (6 mm x 6 mm x 6 mm) were selected for the M-center measurements. Since an appreciable population of M-centers are present in commercially available crystals, the centers are erased by heat treatment. A heat treatment in air at 873 K for 1 h was found satisfactory in eliminating the M-center background. After heat treatment, some of the crystals were kept as controls, while the remainder were exposed to 0.26, 2.6, 26, and 260 mC/kg from a ⁶⁰Co source. After irradiation, the crystals were stored in paper envelopes to prevent unwanted light exposure.

As shown in FIG. 1, the readout apparatus consisted of three distinct functional units: a 70 mW He-Cd 442 nm laser 2, a light-tight box 4 that contained the sample chamber 6 and phototube 8, and a photon counting system 10. The He-Cd laser beam was focused to beam diameter of 1 mm at the crystal face and transmitted through the crystal at the centers of two opposite cube faces. To provide the laser excitation light to the crystals, the laser beam path and the sample chamber were made of black plastic which helped shield stray room light and laser scatter. A broadband interference filter 12 centered at 650 nm was chosen to prevent the 442 nm He-Cd laser light from reaching the phototube 8 and to transmit the M-center luminescence. The filter provided a 650 nm peak transmission of 50% and a bandwidth of 70 nm. Transmission of the scattered 442 nm He-Cd laser light was reduced to 0.01% by the filter 12. A 1 mm aperture was placed between the optical filter and the crystal to help reject some of the background light that accompanies the M-center luminescence. The phototube 8 chosen for the experiment was an RCA 8852 with a red-extended multi-alkali photocathode and was mounted at 90° from the axis of the laser beam. This phototube was chosen for its suitability for photon counting and its excellent red response. The photon counting system consisted of a preamplifier, amplifier, discriminator, and a multichannel scaling board housed in a personal computer. The counting system is capable of 50 MHz rates.

Readout consisted of passing the 70 mW laser beam through the sample chamber and into the LiF crystal while simultaneously mounting photons with the multichannel scaling board within the computer. A region of interest was chosen which consisted of 400 channels with each channel having a time width of 50 ms. An integration was performed over the 400-channel region of interest which lasted for 20 s.

FIG. 2 is a LiF M-center luminescence optical emission spectrum measured using a Tracor Northern optical multichannel analyzer. The LiF crystal was given an exposure of 2.6 C/kg using a ⁶⁰Co gamma source. The peak of the emission spectrum is 665 nm with a half width of 0.36 ev. This result was used to determine the optimal interference filter to use in the M-center luminescence reader. An optical absorption spectrum for a heavily exposed LiF crystal was measured using a Hewlett Packard diode array spectrometer. This absorption spectrum is shown in FIG. 3. The exposure level for the absorption spectrum was 260 C/kg. To resolve the M-center absorption curve adequately, it was found that 260 C/kg was the minimum exposure that could be used. The absorption curve peaks at 443 nm, which matches the 442 nm line of the He-Cd laser.

The following table shows the M-center response as a function of ⁶⁰Co gamma exposure of 0.26, 2.6, 26 and 260 mC/kg.

| Laser Beam at Full Power (50 mW) | |
|---|---|
| Exposure Level (mC/kg⁻¹) | Background Subtracted (Counts/mC/kg⁻¹) |
| 0.26 | 7,040,000 |
| 2.6 | 7,040,000 |
| 26 | 6,190,000 |

| Laser Beam Through a 10% Neutral Density Filter | |
|---|---|
| Exposure Level (mC/kg⁻¹) | Background Substracted (Counts/mC/kg⁻¹) |
| 2.6 | 5,380.000 |
| 26 | 5,270,000 |
| 260 | 5,620,000 |

Two laser power levels were used due to counting saturation of the 260 mC/kg exposure using the full 70 mW of laser power. Within experimental uncertainty, the response follows a linear relationship. The crystals exposed to 0.26 mC/kg gave an integral response that was twice as high as a crystal that received no exposure.

FIG. 4 is a plot of the bleaching rate of the M-center luminescence as a function of time. The crystal was exposed to 26 mC/kg and the laser power was 70 mW delivered for 600 s. The time constant for the bleaching process was found to be 32 s and appears to remain constant over time. For the entire time in which the M-center luminescence was monitored, the total reduction due to bleaching was only 20%.

The time constant associated with the decay of the excited M-center was measured in a straight forward manner. The same readout apparatus that was used for the previous measurements was used in the time-constant measurements. A nitrogen-pumped dye laser was used to excite an irradiated LiF crystal within the readout apparatus, the signal was fed into a Hewlett-Packard digitizing fast storage oscilloscope. The oscilloscope was allowed to average the M-center decay signal until a smooth set of data was obtained. The time constant measured was 70 ns. This appears to be consistent with measurements of the other authors ^{(5,6)}.

The M-center luminescence in LiF occurs with a time constant on the order of 70 ns. Based on this measurements, each M-center in LiF should be capable of producing around 10⁷ photons per second at saturation. A simple calculation based on the oscillator strength of the M-center in LiF predicts the M-center luminescence saturates with a 442 nm laser beam at 40 kw. Since the laser used in the present experiment is 70 mW, large gains in the M-center luminescence signal can be achieved by increasing the excitation power, for example, through use of a high intensity argon laser.

Phototubes that record the M-center luminescence must be extremely sensitive to the redinfra-red emission spectrum if a sensitive dosimeter capable of personnel monitoring is to be realized. Unfortunately, red extended phototubes capable of single photon counting have characteristically large dark counts associated with thermionic emission. A commercially available dye laser provides an elegant solution to the problem of high dark counts and also satisfies the need for large peak powers to achieve saturation of the M-center luminescence. Since dye lasers typically have extremely short pulse lengths, the red extended phototube dark count within the duration of the dye laser pulse becomes negligible. The flashlamp-pumped dye laser can be made to produce very large peak powers with time constants of 10 to 100 µs, orders of magnitude longer than the time constant for the decay of excited M-centers. Therefore, through the use of the flashlamp-pumped dye laser, the M-center luminescence is maximized by producing saturation, while allowing a sampling of the luminescence in a time period that is much longer than the decay constant of the M-center. This condition will provide better statistical results. Fortunately, the M-center luminescence yield at saturation is theoretically optimized with the same laser that produces a negligible dark count.

The most restricting aspect of the M-center luminescence technique in LiF is the large fluorescence background. The unwanted background, stimulated by the direct and scattered laser light, emanates from a number of sources. The first such source is the fluorescence that results within the chamber surfaces from laser light scatter. A careful chamber design both in geometry and in material selection can greatly reduce this source of unwanted light. A second source is the fluorescence that emanates from the crystal surfaces. The surface fluorescence is clearly visible by the human eye under the proper conditions and represents the largest source of unwanted light. The surface fluorescence depends on the nature of the fluorescing species at the surface. The third source of unwanted light is from the bulk of the crystal. Impurities within the crystal that are excited by the laser beam will produce light that interferes with the desired signal. This source of light has not been observed at the present time, due to the large fluorescence signals that mask the bulk crystal effects. The fourth source of background light is from the leakage of the optical filter used both to condition the laser and to block stray laser light from reaching the phototube. Since the phototube is highly sensitive to the exciting laser wavelength, proper filtration is essential. High quality filters and the use of multiple filters may prevent this source of background from causing any serious problems. The final source of background light is perhaps the most troubling.

In the dosimeter application, it is desirable that the dosimeter be reusable, and this implies the need to anneal the crystal so as to remove the M-centers. As noted previously, thermal treatment can be used to eliminate the M-centers. However, at some point of the heat treatment, the M-center will reach an equilibrium level, at which point further reduction in M-center concentration becomes difficult. It remains to be seen whether this concentration level will be suitably low to perform adequate personnel radiation monitoring.

Based on the foregoing, it will be appreciated that M-center luminescence in LiF using a ⁶⁰Co gamma source has been demonstrated to be a useful dosimeter in the exposure range of 0.026 to 260 mC/kg. The major difficulty in using LiF for M-center luminescence dosimetry is the large background of fluorescence which accompanies the M-center luminescence signal. Low cost diode lasers emitting in the infra-red are currently available which could be used to excite those crystals which have their M-center absorption band in the infra-red.

Many alkali halides have their M-center luminescence absorption band in the infra-red. An inexpensive infra-red detector can be used to detect the infra-red luminescence allowing a low cost laser and detection system to be technically feasible. In this way, the M-center luminescence can be used as a means of personnel or environmental dosimetry. By coupling a small infra-red diode laser with an infra-red detector and suitable optical filters, the combination becomes a radiation monitor which gives a real-time analysis.

FIG. 5 illustrates such a dosimeter, comprising a crystal 20 to which are mounted a diode laser 22, a detector 24 to detect the crystal's M-center luminescence, and an optical filter 26 to block the laser light and transmit the crystal's M-center luminescence.

Optically stimulated luminescence is described in co-pending U. S. patent applications Serial Nos. 07/213,245, now U. S. Patent 4,954,707, and 07/420,293, the contents of which are hereby incorporated by reference herein.

It will be appreciated that the invention is not restricted to the particular embodiment that has been described, and that variations may be made therein without departing from the scope of the invention as defined in the appended claims.

### References

1. McLaughlin et al, "Electron and gamma-ray dosimetry using radiation-induced color centers in LiF", Radiat. Phys. Chem. 14, 467-480 (1979).

2. Seitz, "Color centers in alkali halide crystals", Rev. Mod. Physics 18, 348 (1946).

3. Knox, "Inversion symmetry of the M-center", Phys. Rev. Letters 2(3), 87 (1959).

4. Klick, "Luminescence of color centers in alkali halides", Phys. Rev. 79, 894 (1950).

5. Bosi et al, "Lifetime studies on excited (F₂+)* and M centers in NaF doped with magnesium", Phys. Stat. Sol. (b) 140, 355-360 (1987).

6. Bosi et al, "New results on the decay properties of perturbed and unperturbed M-centers in NaCl:CdCl₂", Phys. Stat. Sol. (b) 123, 519-524 (1984).

## Claims

1. A method of measuring radiation dose, comprising:
exposing a body of material (20) to ionizing radiation, the material being crystalline lithium fluoride,
exciting the material with optical radiation at a first wavelength that is near a peak damage centre absorption wavelength of said material, and
thereafter measuring optical energy emitted from the material by luminescence at a second wavelength that is longer than the first wavelength;
characterised in that the material (20) is heated prior to exposure to ionizing radiation thereby to erase damage centres initially present in the material (20).

2. A method according to claim 1 wherein, prior to exposure to ionizing radiation, said material is heated to 873 K for 1 hour.

3. A method according to any preceding claim, comprising measuring optical energy emitted by luminescence in the visible region of the spectrum.

4. A method as claimed in any preceding claim, wherein said optical radiation is from a laser light source.

5. A method as claimed in claim 4 wherein said laser light source is a 442nm He-Cd laser.

6. A method according to any preceding claim, wherein the material (20) is optical window quality crystalline lithium fluoride, the material is excited by laser light at a wavelength in the blue region of the optical spectrum, and the optical energy emitted by luminescence is measured in the red region of the spectrum.

7. A method as claimed in any preceding claim, wherein said optical radiation is from a laser light source that emits light at the first wavelength at a power level of about 70 mW.

8. A method as claimed in any preceding claim characterised in that said first wavelength is near the peak M-centre absorbtion wavelength of the LiF material.

9. A method as claimed in any preceding claim characterised in that:-
(i) said crystalline material (20) is optical grade LiF having a peak M-centre absorbtion wavelength of 443 nm and
(ii) after exposure to ionizing radiation, the material (20) is excited by 442 nm He-Cd laser light.

## Patentansprüche

1. Verfahren zur Messung einer Strahlendosis, mit den Schritten:
Bestrahlung eines Körpers aus einem Material (20) aus kristallinem Lithiumfluorid mit ionisierender Strahlung,
Anregung des Materials mittels optischer Bestrahlung mit einer ersten Wellenlänge, die nahe einer Schadstellen Spitzenabsorptionswellenlänge des Materials liegt, und anschließender
Messung der optischen Energie, die von dem Material mittels Lumineszenz bei einer zweiten Wellenlänge abgegeben wird, die länger ist als die erste Wellenlänge; **dadurch gekennzeichnet,** daß das Material (20) vor der Bestrahlung mit ionisierender Strahlung erwärmt wird, um dadurch Schadstellen zu beseitigen, die anfangs in dem Material (20) vorhanden sind.

2. Verfahren nach Anspruch 1, wobei das Material vor der Bestrahlung mit ionisierender Strahlung für 1 Stunde auf 873 K erwärmt wird.

3. Verfahren nach einem der vorhergehenden Ansprüche, mit dem Schritt der Messung von optischer Energie, die mittels Lumineszenz im sichtbaren Bereich des Spektrums abgegeben wird.

4. Verfahren nach einem der vorhergehenden Ansprüche, wobei die optische Bestrahlung von einer Laser-Lichtquelle stammt.

5. Verfahren nach Anspruch 4, wobei die Laser-Lichtquelle ein 442-nm He-Cd-Laser ist.

6. Verfahren nach einem der vorhergehenden Ansprüche, wobei das Material (20) kristallines Lithiumfluorid von optischer Fensterglasqualität ist, sowie das Material mittels Laserlicht bei einer Wellenlänge im blauen Bereich des Lichtspektrums angeregt wird, und die mittels Lumineszenz ausgestrahlte optische Energie im roten Bereich des Spektrums gemessen wird.

7. Verfahren nach einem der vorhergehenden Ansprüche, wobei optische Bestrahlung von einer Laser-Lichtquelle bewirkt wird, die das Licht mit der ersten Wellenlänge mit einer Energie von etwa 70 mW ausstrahlt.

8. Verfahren nach einem der vorhergehenden Ansprüche, dadurch gekennzeichnet, daß die erste Wellenlänge in der Nähe der M-Zentrums-Spitzenabsorptionswellenlänge des LiF-Materials liegt.

9. Verfahren nach einem der vorhergehenden Ansprüche, dadurch gekennzeichnet, daß
(i) das kristalline Material (20) LiF von optischer Qualität ist und eine M-Zentrums-Spitzenabsorptionswellenlänge von 443 nm aufweist, und daß
(ii) nach der Bestrahlung mit ionisierender Strahlung das Material (20) durch 442-nm He-Cd-Laserlicht angeregt wird.

## Revendications

1. Procédé de mesure d'une dose de rayonnement, comprenant :
l'exposition d'un corps d'un matériau (20) à un rayonnement ionisant, le matériau étant du fluorure de lithium cristallisé,
l'excitation du matériau avec un rayonnement optique, suivant une première longueur d'onde qui est proche d'une longueur d'onde d'absorption du centre de détérioration formant un pic, dudit matériau, et
la mesure effectuée ensuite de l'énergie optique émise depuis le matériau, par luminescence, suivant une seconde longueur d'onde qui est plus longue que la première longueur d'onde ;
caractérisé en ce que le matériau (20) est chauffé avant l'exposition au rayonnement ionisant, afin, ainsi, d'effacer les centres de détérioration initialement présents dans le matériau (20).

2. Procédé selon la revendication 1, dans lequel, avant l'exposition au rayonnement ionisant, ledit matériau est chauffé jusqu'à 873°K pendant 1 heure.

3. Procédé selon l'une quelconque des revendications précédentes, comprenant la mesure de l'énergie optique émise par luminescence dans la région visible du spectre.

4. Procédé selon l'une quelconque des revendications précédentes, dans lequel ledit rayonnement optique est produit depuis une source de lumière laser.

5. Procédé selon la revendication 4, dans lequel ladite source de lumière laser est un laser à l'héliumcadmium de 442 nm.

6. Procédé selon l'une quelconque des revendications précédentes, dans lequel le matériau (20) est du fluorure de lithium cristallisé de qualité de fenêtre optique, le matériau étant excité par une lumière laser suivant une longueur d'onde dans la région des bleus du spectre optique, et l'énergie optique émise par luminescence étant mesurée dans la région des rouges du spectre.

7. Procédé selon l'une quelconque des revendications précédentes, dans lequel ledit rayonnement optique est produit depuis une source de lumière laser qui émet de la lumière suivant une première longueur d'onde dont le niveau de puissance est de 70 mW environ.

8. Procédé selon l'une quelconque des revendications précédentes, caractérisé en ce que ladite première longueur d'onde est proche de la longueur d'onde d'absorption du centre M formant un pic, du matériau en fluorure de lithium (LiF).

9. Procédé selon l'une quelconque des revendications précédentes, caractérisé en ce que :
(i) ledit matériau cristallisé (20) est du fluorure de lithium (LiF) de qualité optique ayant une longueur d'onde d'absorption du centre M formant un pic de 443 nm et
(ii) après exposition au rayonnement ionisant, le matériau (20) est excité par une lumière laser à l'hélium-cadmium de 442 nm.
